# EUROPEAN PATENT APPLICATION

(11) **EP 4 272 918 A1**
(43) Date of publication of application: **08.11.2023**
(21) Application number: 23171211.8
(22) Date of filing: 03.05.2023
(51) Int. Cl.: B27B 17/10

(54) **CHAINSAW COMPRISING A DRIVE COUPLING HAVING A NEUTRAL STATE WHEREIN THE CHAIN IS FREELY MOVABLE**

(30) Priority: 03.05.2022 US 202263337638 P
(71) Applicant: Milwaukee Electric Tool Corporation, Brookfield WI 53005-2550 (US)
(72) Inventor: Libert, Scott, Brookfield, WI (US); Patel, Ankit, Brookfield, WI (US); Schmidt, Patrick, Brookfield, WI (US); Wyler, Drew, Brookfield, WI (US); Banholzer, Hans, Brookfield, WI (US); McCue, Shane, Brookfield, WI (US); Cholst, Beth, Brookfield, WI (US); Schlosser, Drake, Brookfield, WI (US); Puls, Kevin, Brookfield, WI (US)
(74) Representative: Grünecker Patent- und Rechtsanwälte PartG mbB

(57) **Abstract**

Chainsaws and methods of operating chainsaws are provided. A chainsaw (100) includes a guide bar (102) supporting a chain (104); a motor (114) configured to drive the chain (104), the motor (114) receiving power from an electrical energy source (118) of the chainsaw (100); a sprocket (116) operably coupled between the motor (114) and the chain (104) to impart driving force from the motor (114) to the chain (104); and an operating device (122) operably coupled between the motor (114) and the sprocket (116) and moveable between a driving state and a neutral state, wherein the chain (104) is freely moveable in at least one direction relative to the motor (114) when the operating device is in the neutral state.

## Description

### CROSS-REFERENCE TO RELATED APPLICATIONS

The present application claims priority to U.S. Provisional Patent Application 63/337,638 filed on May 3, 2022 the disclosure of which is incorporated by reference herein in its entirety.

### FIELD

The present disclosure relates generally to chainsaws.

### BACKGROUND

Chainsaws are power tools used to cut through objects. Chainsaws generally utilize a continuous chain which moves around a guide bar. The chain includes teeth which have sharpened edges that cut into the object as they are moved thereagainst. The teeth become dull and cutting efficiency decreases with continued use.

Traditionally, operators sharpen the teeth of the chain using a file. The file is individually drawn along each tooth to restore the cutting edge to factory sharp. To make sharpening easier, operators typically sharpen a few teeth at a time and then advance the chain to a position where new (dull) teeth are disposed at a convenient location for sharpening. This operation is repeated, i.e., sharpen and advance the chain, until the operator sharpens all of the teeth of the chain.

For gas powered engines, it is often easy to move the chain on the guide bar to continuously expose new (dull) teeth. However, electric chainsaws typically experience significant resistance to chain movement as a result of direct drive between the electric motor and the chain. This makes it significantly harder to sharpen the teeth on electric chainsaws.

Accordingly, improved chainsaws and chainsaw sharpening methods are desired in the art. In particular, chainsaws which provide easier movement of the chain to allow for repositioning of the chain during sharpening would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a chainsaw is provided. The chainsaw includes a guide bar supporting a chain; a motor configured to drive the chain, the motor receiving power from an electrical energy source of the chainsaw; a sprocket operably coupled between the motor and the chain to impart driving force from the motor to the chain; and an operating device operably coupled between the motor and the sprocket and moveable between a driving state and a neutral state, wherein the chain is freely moveable in at least one direction relative to the motor when the operating device is in the neutral state.

In accordance with another embodiment, a method of operating a chainsaw is provided. The method includes providing a chainsaw comprising a guide bar supporting a chain, a motor having an output shaft to drive the chain, a sprocket operably coupled between the motor and the chain to impart driving force from the motor to the chain, and an operating device operably coupled between the motor and the sprocket; interrupting power to the motor from an electrical energy source of the chainsaw to stop driving the chain; moving the operating device from a driving state to a neutral state; and freely moving the chain relative to the guide bar in at least one direction relative to the output shaft of the motor when the operating device is in the neutral state.

In accordance with another embodiment, a chainsaw is provided. The chainsaw includes a motor receiving power from an electrical energy source of the chainsaw, wherein the motor drives a chain about a guide bar, wherein the chain is operably fixed to an output shaft of the motor when an operating device operably coupled between the motor and the chain is in a driving state, and wherein the chain is freely moveable in at least one direction relative to the output shaft of the motor when the operating device is in a neutral state.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a chainsaw in accordance with embodiments of the present disclosure;
FIG. 2 is a view of a chainsaw without a portion of a housing of the chainsaw revealing a drive system in accordance with embodiments of the present disclosure;
FIG. 3 is a front view of a sprocket associated with the drive system of the chainsaw in accordance with embodiments of the present disclosure;
FIG. 4A is a section view of a sprocket associated with the drive system and an operating device at least partially disposed within a recess of the sprocket in accordance with embodiments of the present disclosure;
FIG. 4B is a section view of a sprocket associated with the drive system and an operating device at least partially disposed within a recess of the sprocket in accordance with embodiments of the present disclosure;
FIG. 5 is a schematic view of a drive system of the chainsaw in accordance with embodiments of the present disclosure;
FIG. 6 is an operating device as seen in a first position in accordance with embodiments of the present disclosure;
FIG. 7 is the operating device of FIG. 6 as seen in a second position in accordance with embodiments of the present disclosure;
FIG. 8 is a schematic view of a drive system of the chainsaw in accordance with embodiments of the present disclosure;
FIG. 9 is an operating device as seen in a first position in accordance with embodiments of the present disclosure;
FIG. 10 is the operating device of FIG. 9 as seen in the second position in accordance with embodiments of the present disclosure;
FIG. 11 is a schematic view of a drive system of the chainsaw in accordance with embodiments of the present disclosure;
FIG. 12 is a schematic view of a drive system of the chainsaw in a second position in accordance with embodiments of the present disclosure;
FIG. 13 is an enlarged view of a ramped interface of an operating device of the drive system in FIG. 12 in accordance with embodiments of the present disclosure;
FIG. 14 is a schematic view of the drive system of the chainsaw of FIG. 12 in a first position in accordance with embodiments of the present disclosure;
FIG. 15 is an enlarged view of the ramped interface of the operating device of the drive system in FIG. 14 in accordance with embodiments of the present disclosure;
FIG. 16A is a schematic view of a drive system of the chainsaw in accordance with embodiments of the present disclosure;
FIG. 16B is a schematic view of a drive system of the chainsaw in accordance with embodiments of the present disclosure;
FIG. 17 is an operating device as seen in a first position in accordance with embodiments of the present disclosure;
FIG. 18 is an operating device as seen in a first position in accordance with embodiments of the present disclosure;
FIG. 19 is an operating device as seen in a first position in accordance with embodiments of the present disclosure;
FIG. 20 is an operating device as seen in a first position in accordance with embodiments of the present disclosure;
FIG. 21 is a manual interface for motor cogging in accordance with embodiments of the present disclosure;
FIG. 22 is a sprocket having a head for interfacing with a tool for manually motor cogging a chain in accordance with embodiments of the present disclosure;
FIG. 23 is a gearbox in accordance with embodiments of the present disclosure;
FIG. 24 is a manual engagement element which permits an operator to manually motor cog a chain in accordance with embodiments of the present disclosure;
FIG. 25 is a chain sharpening device in accordance with embodiments of the present disclosure; and
FIG. 26 is a flowchart of a method of operating a chainsaw in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, chainsaws, methods associated with chainsaws, and other apparatuses described herein allow an operator to more easily manipulate a chain, e.g., for sharpening the chain or to roll the chainsaw out of a cut in the case of stall. Unlike gas powered chainsaws which utilize clutches and other similar slip elements disposed between the engine and drive sprocket, electric chainsaws typically utilize direct drive whereby the motor is coupled to the drive sprocket without any intervening slip elements. As a result, the chain is typically difficult to move due to motor drag, sometimes referred to as motor cogging. To advance the chain, such as when sharpening teeth of the chain or to roll the chainsaw out of a cut in the case of stall, the operator is forced to continuously overcome motor cogging. Chainsaws described herein overcome motor cogging issues by utilizing an operating device which selectively interrupts the drive system between the motor and drive sprocket, thereby allowing the operator to more easily manipulate the chain on the guide bar.

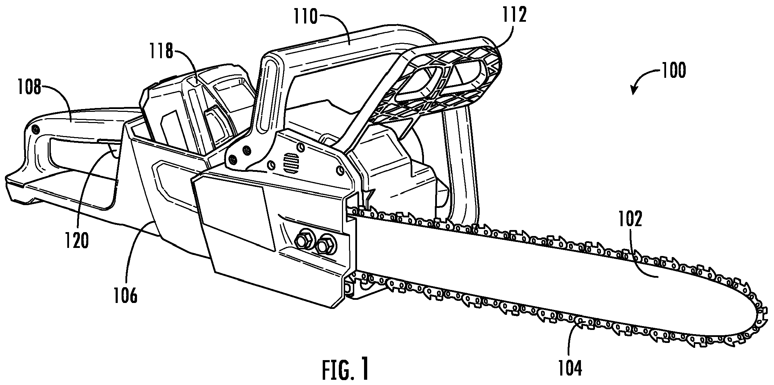

Referring now to the drawings, FIG. 1 illustrates a chainsaw 100 in accordance with an embodiment of the present disclosure. The chainsaw 100 generally includes a guide bar 102 with a chain 104 movably coupled to an outer track of the guide bar 102. The chain 104 includes teeth which, when moved along the guide bar 102, allow the chain 104 to cut into material, such as logs and branches. The chainsaw 100 can further include a housing 106. The guide bar 102 can extend from the housing 106. The chainsaw 100 can include a handle 108. In certain instances, the chainsaw 100 can further include a secondary handle 110. A brake 112 can be positioned along the chainsaw 100 at a location, for example, adjacent to the second handle 110. The brake 112 can provide safety braking which prevents the chainsaw 100 from kicking back onto the operator with the chain 104 moving.

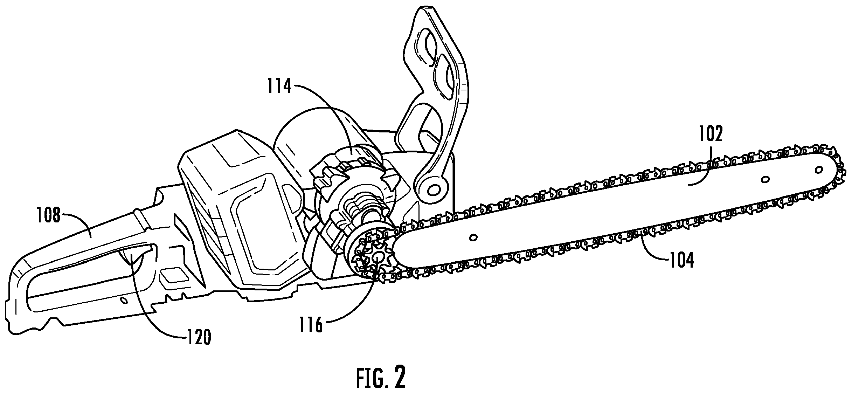

FIG. 2 illustrates a drive system of the chainsaw 100 as seen with a portion of the housing 106 removed. The drive system includes a motive device, such as an electric motor (hereinafter, referred to as motor 114), which drives a sprocket 116. The sprocket 116 is operably coupled between the motor 114 and the chain 104 to transmit driving force from the motor 114 to the chain 104. The sprocket 116 is engaged with the chain 104 such that rotation of the sprocket 116 causes the chain 104 to move relative to the guide bar 102. The motor 114 can be powered by an electrical energy source, such as a rechargeable battery 118. In the depicted embodiment, the chainsaw 100 includes an actuator 120. The actuator 120 is disposed proximate to the handle 108. When depressed, the actuator 120 can initiate movement of the motor 114 to cause the chain 104 to move. As the actuator 120 is further depressed, a speed of the electric motor 114 increases. The actuator 120 can variably affect the speed of the motor 114 between a zero operating speed, which occurs when the actuator 120 is not depressed, and a maximum operating speed, which occurs when the actuator 120 is fully depressed.

Traditionally, electric chainsaws 100 utilize motors which are directly coupled to the chain, also referred to as direct drive. When the motor is not powered, i.e., when the motor is not actively driving the chain, the motor resists movement of the chain, making manual movement more difficult as the operator must overcome resistive forces created by the motor. This is sometimes referred to as motor cogging.

To overcome the problems associated with motor cogging, the drive system of the chainsaw 100 further includes an operating device 122 coupled between the motor 114 and the sprocket 116. The operating device 122 moves, e.g., selectively moves, between a driving state and a neutral state. In the driving state, the operating device 122 transmits power, i.e., torque, from the motor 114 to the sprocket 116. In the neutral state, the operating device 122 interrupts the transmission of power from the motor 114 to the sprocket 116. With the operating device 122 in the neutral state, the operator can freely move, e.g., manually manipulate, the chain 104 in at least one direction (a forward direction or a reverse direction) on the guide bar 102. In certain instances, the operator can freely move the chain 104 in both the forward and rearward direction when the operating device 122 is in the neutral state. As used herein, free movement and similar terms are intended to refer to conditions where an operator can move the chain of the chainsaw without drag exhibited on the chain as a result of motor cogging. It should be understood that some resistance may be normal even with free movement as a result of frictional drag of the chain on the guide bar, rotational resistance of the sprocket, internal friction within the chain, or the like.

In an embodiment, the operating device 122 can be moved between the driving state and the neutral state by the operator. For example, the operating device 122 can include a user engageable interface which allows the operator to move the operating device 122 from the driving state to the neutral state. In certain instances, the operator may only be required to initiate the neutral state, e.g., by depressing a user actuatable button. The operating device 122 may return to the driving state automatically, e.g., when the operator releases the user actuatable button. In other instances, the operator may need to initiate each of the driving state and the neutral state. In another embodiment, the operating device 122 can automatically move between the driving state and the neutral state upon occurrence of a condition. For example, in certain instances the operating device 122 can move between the driving state and the neutral state when a prescribed rotational threshold, e.g., a prescribed number of rotations per minute (RPM), of an output shaft of the motor 114 is achieved.

Operating devices 122 for use with chainsaws 100 in accordance with embodiments will now be described in greater detail.

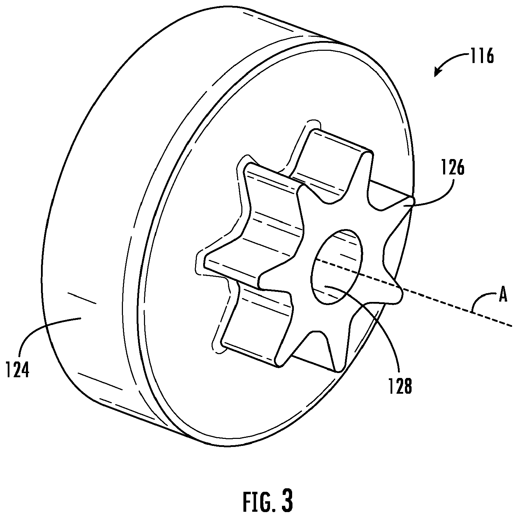

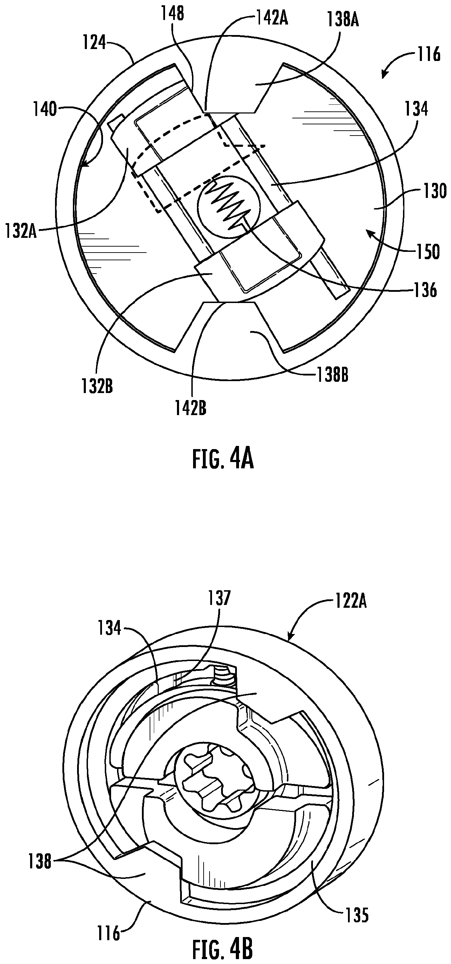

FIG. 3 depicts a front side of the sprocket 116 which engages the chain 104. FIG. 4A depicts a section view of the sprocket 116 which engages with a radial centrifugal clutch 122A acting as the operating device 122 in accordance with an embodiment.

Referring initially to FIG. 3, the sprocket 116 includes a body 124 defining teeth 126. The teeth 126 interface with links of the chain 104. As the body 124 rotates about axis A, the teeth 126 drive the links of the chain 104 to move the chain 104 about the guide bar 102. A fastener, such as a bolt (not illustrated) can extend through a central opening 128 in the body 124 to couple the body 124 to the housing 106 (or a support structure associated with the housing 106).

As shown in FIG. 4A, the body 124 can include a recessed area 130 extending into the body 124. The operating device 122 can be disposed at least partially within the recessed area 130. The operating device 122 depicted in FIG. 4A is a radial centrifugal clutch 122A. The radial centrifugal clutch 122A includes one or more weighted elements 132A and 132B (collectively referred to hereinafter as the weighted elements 132). The weighted elements 132 can be retained by a guide 134 that allows the weighted elements 132 to move from a first position (as shown by the dashed lines) and a second position (as shown by the solid lines) as centripetal forces increase during rotation of the centrifugal clutch 122A. Movement of the weighted elements 132 between the first and second positions may occur in a linear direction of translation. A spring 136 can bias the weighted elements 132 to the first position. Thus, when forces decrease beyond a prescribed threshold, the weighted elements 132 return to the first position. The prescribed threshold can be determined in view of the spring 136, e.g., a selected spring constant, the mass of the weighted elements 132, or the like.

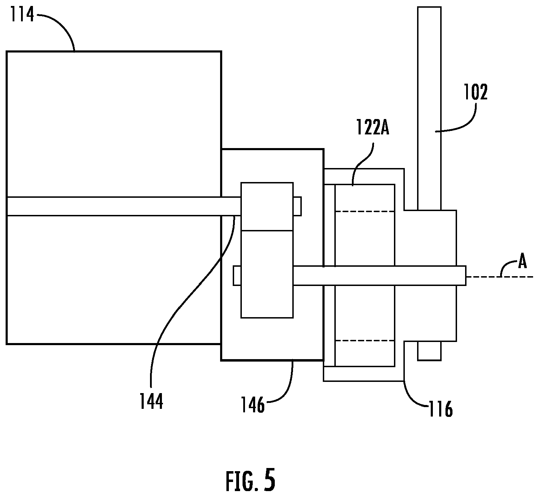

FIG. 5 is a schematic view of the drive system of the chainsaw 100 using the radial centrifugal clutch 122A depicted in FIGS. 3 and 4. The radial centrifugal clutch 122A is operably coupled to an output shaft 144 of the motor 114. In an embodiment, the radial centrifugal clutch 122A is indirectly coupled to the output shaft 144 through a gearbox 146. Torque from the output shaft 144 is transferred to the radial centrifugal clutch 122A through the gearbox 146. In another embodiment, the radial centrifugal clutch 122A can be directly coupled to the output shaft 144. As the rotational speed of the motor 114 increases, the weighted elements 132 move radially outward from the first position to the second position.

Referring again to FIG. 4A, the sprocket 116 can include one or more features, such as features 138A and 138B (collectively referred to hereinafter as features 138) that interface with the weighted elements 132 in the second position. The features 138 depicted in FIG. 4A are lobes extending radially inward from an inner sidewall 140 of the body 124. The features 138 define drive surfaces 142A and 142B (collectively referred to hereinafter as drive surfaces 142) against which the weighted elements 132 seat when in the second position. In an embodiment, the drive surfaces 142 can be shaped to form a close fit with the weighted elements 132. As depicted in FIG. 4A, the weighted elements 132 can have different shapes as compared to one another. For example, one of the weighted elements 132A can have a cutout 148 that receives the drive surface 142A while the other of the weighted elements 132B can wedge against a flat portion of the drive surface 142B.

As rotational speed of the output shaft 144 increases above the prescribed rotational threshold, the weighted elements 132 move radially outward to interface with the drive surfaces 142, temporarily keying the output shaft 144 with the sprocket 116. The output shaft 144 remains keyed with the sprocket 116 as long as the rotational speed of the output shaft 144 is maintained above the prescribed rotational threshold. When the rotational speed of the output shaft 144 decreases below the prescribed rotational threshold, the weighted elements 132 uncouple from the drive surfaces 142 and move radially inward to clear the features 138, allowing the sprocket 116 to rotate independent of the output shaft 144. It should be understood that the prescribed threshold for engaging the radial centrifugal clutch 122A may not be the same as the prescribed threshold for disengaging the radial centrifugal clutch 122A as a result of dynamic motion of the weighted elements 132 along the guide 134, friction between the weighted elements 132 and the drive surfaces 142, or the like. Similarly, it should be understood that the features 138 interfacing with the radial centrifugal clutch 122A are not intended to be limited to lobes. By way of non-limiting example, in other embodiments, the features 138 can include grooves in the sidewall 140 or a back surface 150 of the sprocket 116 into which projections of the weighted elements 132 extend, lobes which extend from the back surface 150, or the like.

FIG. 4B illustrates an embodiment of the radial centrifugal clutch 122A where the guide 134 is part of a clutch hub 135 which is keyed with the output shaft 144 (or a gear of the gearbox 146). In particular, the guide 134 depicted in FIG. 4B includes a ridge 137 which guides a complementary groove (not illustrated) in the weighted elements 132 between the first and second positions. In some instances, the ridge 137 includes a single ridge. In other instances, the ridge 137 includes a plurality of ridges, such as at least two ridges, at least three ridges, at least four ridges, at least five ridges, or at least six ridges. The ridges 137 can all extend in a generally parallel direction to direct movement of the weighted elements 132. It should be understood that the ridge 137 may alternatively take the form of a recess which receives a ridge of the weighted elements 132. In some instances, the ridge 137 can include some ridges and some recesses. For example, the weighted elements 132 can be interfaced with the clutch hub 135 through a ridged/recessed interface including alternating ridges and recesses disposed in the clutch hub 135 and the other of ridges and recesses disposed in the weighted elements 132. Yet other arrangements are contemplated herein. Similar to the embodiment depicted in FIG. 4A, as the weighted elements 132 move in the radial direction, they engage with features 138 to temporarily key the output shaft 144 to the sprocket 116.

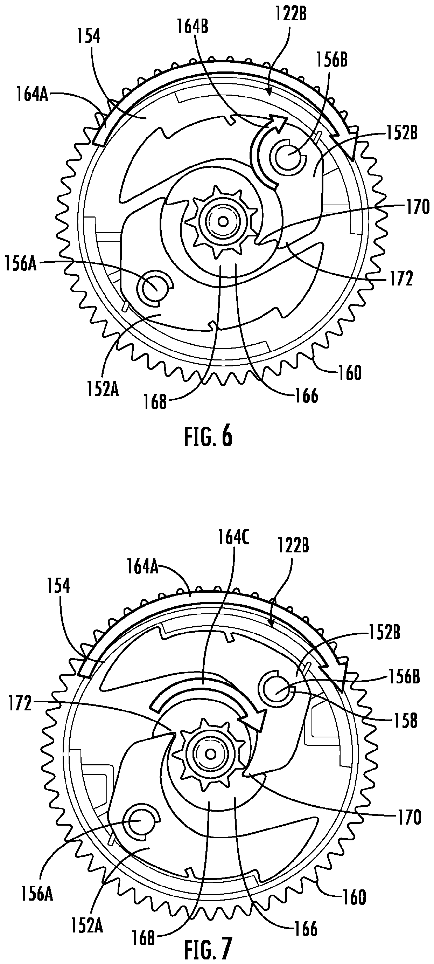

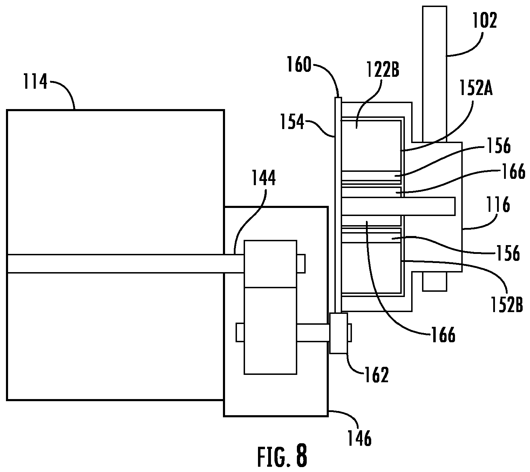

FIGS. 6 to 8 illustrate an interference centrifugal clutch 122B acting as the operating device 122 for use with the drive system of the chainsaw 100 in accordance with another embodiment. Similar to the radial centrifugal clutch 122A depicted in FIGS. 3 to 5, the interference centrifugal clutch 122B includes one or more weighted elements 152A and 152B (collectively referred to hereinafter as the weighted elements 152) which move between a first position (FIG. 6) and a second position (FIG. 7) to disengage and engage the drive system and selectively transmit power from the motor 114 to the sprocket 116. With the weighted elements 152 in the first position, power can be interrupted, i.e., not transmitted, from the motor 114 to the sprocket 116. With the weighted elements 152 in the second position, power can be transmitted from the motor 114 to the sprocket 116.

The weighted elements 152 are each coupled to a carrier 154 through a rotatable interface, such as posts 156A and 156B (collectively referred to hereinafter as the posts 156). Fastener 158 can secure the weighted elements 152 on the posts 156 and prevent the weighted elements 152 from moving therefrom while simultaneously permitting the weighted elements 152 to rotate relative to the posts 156. By way of non-limiting example, the fasteners 158 can include retaining rings, such as c-clamps which fit within a slotted groove extending around each one of the posts 156. One or more springs (not shown) can bias the weighted elements 152 to the first position. As with the driving system described with respect to FIG. 4A, the spring(s) biasing the weighted elements 152 to the first position can be selected to have a spring constant that achieves activation of the interference centrifugal clutch 122B at the prescribed rotational threshold.

The carrier 154 can be coupled to the output shaft 144 of the motor 114, e.g., through the gearbox 146. In an embodiment, the carrier 154 defines an outer toothed profile 160 which interfaces with a gear 162 of the gearbox 146. As the gearbox 146 is driven by the motor 114, the carrier 154 is driven to rotate by the gearbox 146 in a direction as shown by arrow 164A. As rotational speed of the carrier 154 increases above the prescribed threshold, the weighted elements 152 rotate about their posts 156 from the first position (FIG. 6) to the second position (FIG. 7) as shown by arrow 164A in FIG. 6. In the first position, i.e., prior to rotational speed of the carrier 154 reaching the prescribed threshold, the weighted elements 152 can move around a central engagement member 166 without interacting therewith. However, once the carrier 154 reaches the prescribed threshold, the weighted elements 152 displace and engage with the central engagement member 166, temporarily keying the output shaft 144 with the central engagement member 166 (and thus the sprocket 116) to rotate in a direction shown by arrow 164C. The output shaft 144 remains keyed with the sprocket 116 as long as the rotational speed of the output shaft 144 is maintained above the prescribed threshold. When the rotational speed of the output shaft 144 decreases below the prescribed threshold, the weighted elements 152 uncouple from the central engagement member 166 and rotate to the first position in a direction opposite arrow 164B to clear the central engagement member 166, thereby allowing the sprocket 116 to rotate independent of the output shaft 144.

The central engagement member 166 can generally include a body 168 defining one or more receiving areas 170. Each receiving area 170 can be sized and shaped to receive a driving surface 172 of the weighted elements 152. The receiving areas 170 can be shaped to accept and retain the driving surfaces 172 while the carrier 154 rotates at speeds above the prescribed threshold. The receiving areas 170 can further be shaped to uncouple with the driving surfaces 172 when the carrier rotates at speeds below the prescribed threshold. For example, edges can be shaped and oriented to accommodate disengagement of the driving surfaces 172 from the receiving areas 170.

In some instances, the motor 114 may be drivable in a reverse direction (or the gearbox 146 can permit reverse rotation at the sprocket 116 during normal forward operating of the motor 114, e.g., by a selectable reverse gearing path). In an embodiment, the motor 114 may be driven in reverse to disengage the operating device 122. As the carrier 154 is driven in reverse, the weighted elements 152 release from the driving surfaces 172 to disengage the operating device 122.

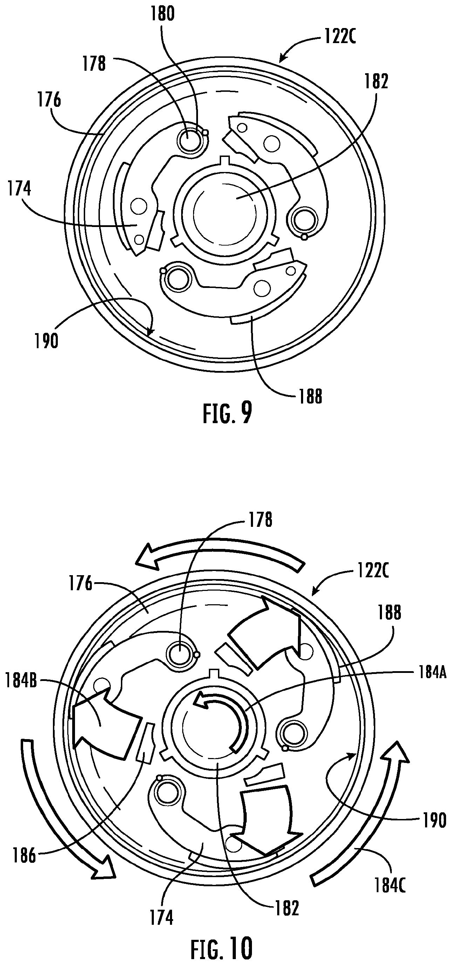

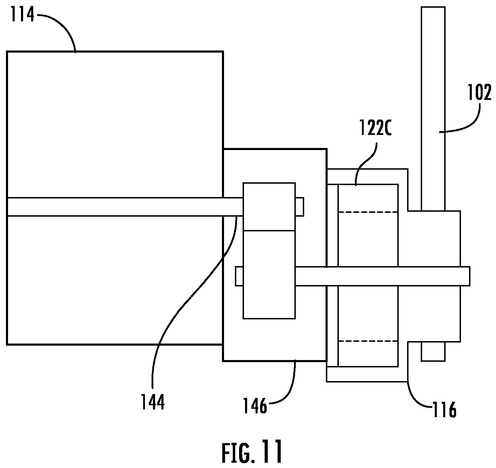

FIGS. 9 to 11 illustrate a frictional centrifugal clutch 122C acting as the operating device 122 for use with the drive system of the chainsaw 100 in accordance with another embodiment. Similar to the radial centrifugal clutch 122A depicted in FIGS. 3 to 5 and the interference centrifugal clutch 122B depicted in FIGS. 6 to 8, the frictional centrifugal clutch 122C includes one or more weighted elements 174A and 174B (collectively referred to hereinafter as the weighted elements 174) which move between a first position (FIG. 9) and a second position (FIG. 10) to disengage and engage the drive system and selectively transmit power from the motor 114 to the sprocket 116. With the weighted elements 174 in the first position, power can be uncoupled, i.e., not transferred, from the motor 114 to the sprocket 116. With the weighted elements 174 in the second position, power can be transferred from the motor 114 to the sprocket 116.

The weighted elements 174 are each coupled to a carrier 176 through a rotatable interface, such as posts 178A and 178B (collectively referred to hereinafter as the posts 178). A fastener 180 secures the weighted elements 174 on the posts 178 and prevents the weighted elements 174 from moving therefrom while simultaneously permitting the weighted elements 174 to rotate relative to the posts 178. By way of non-limiting example, the fastener 180 can include a retaining ring, such as a c-clamp which fits within a slotted groove extending around each of the posts 178. One or more springs (not shown) can bias the weighted elements 174 to the first position. As with the driving system described with respect to FIG. 4A, the spring(s) biasing the weighted elements 174 to the first position can be selected to have a spring constant that achieves activation of the frictional centrifugal clutch 122C at the prescribed rotational threshold.

The carrier 176 can be coupled to the output shaft 144 of the motor 114, e.g., through the gearbox 146. In an embodiment, the carrier 176 comprises a central drive shaft 182 which interfaces with the gearbox 146. The central drive shaft 182 can be integral with the carrier 176 or attached to the carrier 176. As the gearbox 146 is driven by the motor 114, the carrier 176 is driven to rotate by the gearbox 146 in a direction as shown by arrow 184A. As rotational speed of the carrier 176 increases above the prescribed threshold, the weighted elements 174 rotate about their posts 178 from the first position (FIG. 9) to the second position (FIG. 10) as shown by arrow 184B in FIG. 10. In the first position, i.e., prior to rotational speed of the carrier 176 reaching the prescribed threshold, the weighted elements 174 can rest against supports 186. The supports 186 can form stop surfaces against which the weighted elements 174 rest against. In an embodiment, each weighted element 174 can have its own support 186. Once the carrier 154 reaches the prescribed threshold, the weighted elements 174 displace outward until an engagement surface 188 of the weighted elements 174 engages with an inner sidewall 190 (e.g., an inner sidewall of the sprocket 116), temporarily keying the output shaft 144 with the sprocket 116 to rotate in a direction shown by arrow 184C. The engagement surface 188 can include a relatively high friction material (i.e., having a coefficient of friction greater than a coefficient of friction of the material of the weighted elements 174) which increases frictional engagement between the weighted elements 174 and the inner sidewall 190. The output shaft 144 remains keyed with the sprocket 116 as long as the rotational speed of the output shaft 144 is maintained above the prescribed threshold. When the rotational speed of the output shaft 144 decreases below the prescribed threshold, the weighted elements 174 uncouple from sidewall 190 and rotate to the first position in a direction opposite arrow 184B to clear the sidewall 190, thereby allowing the sprocket 116 to rotate independent of the output shaft 144.

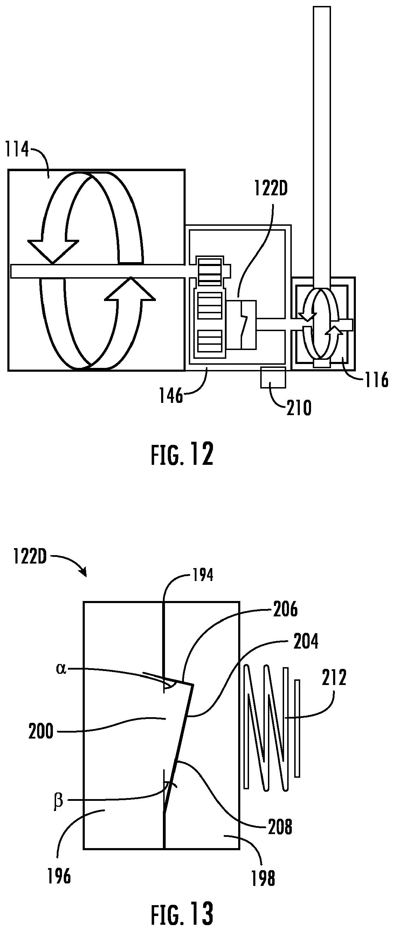

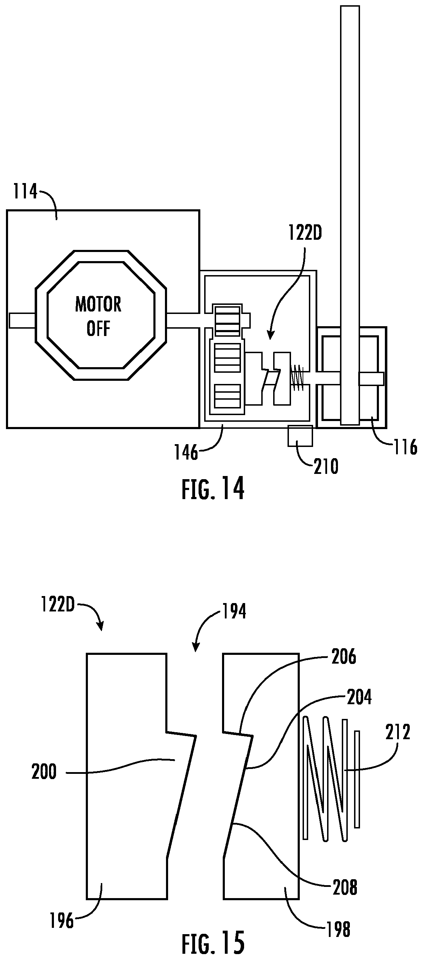

FIGS. 12 to 15 illustrate a one-way element 122D acting as the operating device 122 for use with the drive system of the chainsaw 100 in accordance with another embodiment. The one-way element 122D comprises a ramped interface 194 formed by a first ramped element 196 coupled to the output shaft 144 and a second ramped element 198 coupled to the sprocket 116. As depicted in FIGS. 12 and 13, the ramped interface 194 is in an activated state whereby torque from the motor 114 is transmitted to the sprocket 116. As depicted in FIGS. 14 and 15, the ramped interface 194 is in a deactivated state whereby the first and second ramped elements 196 and 198 are spaced apart from one another such that power is uncoupled, i.e., not transmitted, from the motor 114 to the sprocket 116.

The first and second ramped elements 196 and 198 can define complementary features that allow the first and second ramped elements 196 and 198 to selectively key together to transmit rotation between the motor 114 and the sprocket 116. By way of non-limiting example, the first ramped element 196 can include a projection 200 that seats within a recess 202 of the second ramped element 198. The projection 200 can define an upstream end 204, as seen when the one-way element 122D rotates, and a downstream end 206, as seen when the one-way element 122D rotates. In an embodiment, an angle of the upstream end 204 can be steeper than an angle of the downstream end 206, as measured with respect to the ramped interface 194. An angle α of the upstream end 204 can be at least 50 degrees, such as at least 55 degrees, such as at least 60 degrees, such as at least 65 degrees, such as at least 70 degrees, such as at least 75 degrees, such as at least 80 degrees, such as at least 85 degrees. In an embodiment, the angle α can be approximately 90 degrees. An angle β of the downstream end 206 can be less than 60 degrees, such as less than 50 degrees, such as less than 40 degrees, such as less than 30 degrees, such as less than 20 degrees.

The upstream end 204 of the first ramped element 196 can drive the second ramped element 196 in a forward direction when the ramped interface 194 is activated and the motor 114 is powered. The second ramped element 198 can slip relative to the first ramped interface 194 when the chain 104 (FIG. 1) is manually moved in a forward direction even when the ramped interface 194 is activated. In this regard, an operator can manually move the chain 104 in a forward direction even when the ramped interface 194 is activated. To manually move the chain 104 in the reverse direction, the operator can cause the first and second ramped elements 196 and 198 to move to the deactivated state depicted in FIGS. 14 and 15. With the first and second ramped elements 196 and 198 in the deactivated state, the operator can manually move the chain 104 in either the forward or reverse directions without drag on the chain 104 caused by the motor 114.

In an embodiment, the angle β of the downstream end 206 can be selected to prevent slip between the first and second ramped elements 196 and 198. For example, the angle β can be the same as the angle α of the upstream end 204. Alternatively, the angle β of the downstream end 206 can be different than the angle α of the upstream end 204 and at least 50 degrees, such as at least 55 degrees, such as at least 60 degrees, such as at least 65 degrees, such as at least 70 degrees, such as at least 75 degrees, such as at least 80 degrees, such as at least 85 degrees. In such embodiment, the ramped interface 194 can remain activated in both the forward and reverse directions until the operator deactivates the ramped interface 194.

Deactivating the ramped interface 194 may be performed by a user engageable element 210, such as an actuatable lever, a button, a switch, a toggle, a sliding latch, or the like. In an embodiment, the user engagement element 210 may be biased in a manner to maintain the ramped interface 194 in the activated state when the user engagement element 210 is not actively actuated. For example, the user engagement element 210 can be spring biased to the activated state. In another embodiment, the user engagement element 210 may remain at a selected position to maintain the ramped interface 194 in the activated or deactivated states upon initial actuation of the user engagement element 210. Thus, the operator must return the user engagement element 210 to the non-actuated state to restore the ramped interface 194 in the activated state prior to use.

A spring 212 can interact with one or more components of the one-way element 122D to maintain the first and second ramped elements 196 and 198 in the activated state. By way of example, the spring 212 can bias the second ramped element 198 towards the first ramped element 196. When the operator actuates the user engagement element 210, the second ramped element 198 can displace from the first ramped element 196 to permit relative movement therebetween, i.e., deactivate the ramped interface 194 and permit manual adjustment of the chain 104 in both forward and reverse directions. The displaced second ramped element 198 can compress the spring 212, creating restoring force to return the second ramped element 198 towards the first ramped element 196.

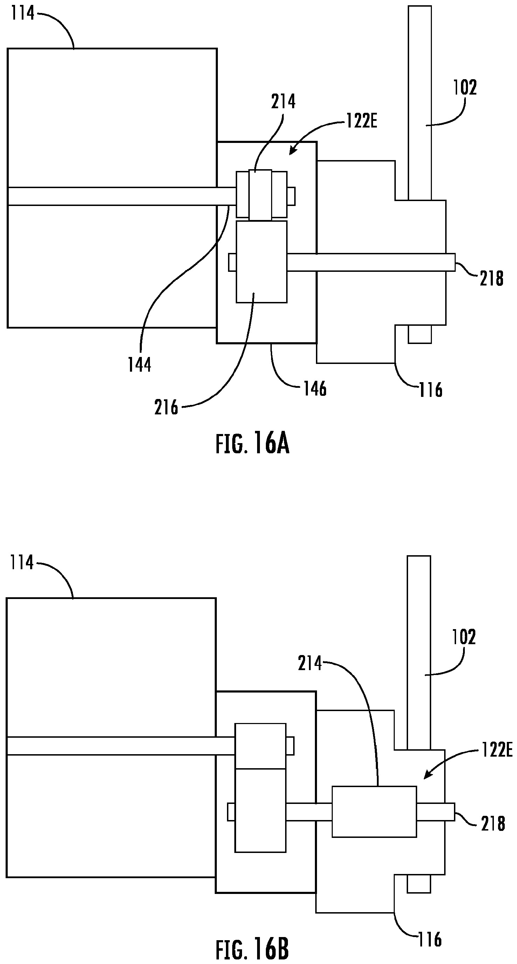

FIGS. 16A and 16B illustrate a one-way element 122E acting as the operating device 122 for use with the drive system of the chainsaw 100 in accordance with another embodiment. The one-way element 122E includes a one-way bearing 214 coupled between the output shaft 144 of the motor 114 and the sprocket 116. The one-way bearing 214 transfers power from the motor 114 to the sprocket 116 in a forward direction when the motor 114 is running. When the motor 114 is not running, i.e., the output shaft 144 is not actively rotating, the operator can freely move the chain 104 (FIG. 1) in the forward direction, overrunning the drive system at the one-way bearing 214. In certain instances, the chain 104 may be unmovable in the rearward direction regardless of whether the motor 114 is running or inactive due to resistance created between a stator and rotor of the motor 114.

As depicted in FIG. 16A, the one-way bearing 214 is coupled to the output shaft 144 of the motor 114. The one-way bearing 214 is operably coupled with a driven gear 216 of the gearbox 146 to drive the driven gear 216 in the forward direction. The driven gear 216 is coupled with an output shaft 218 fixed to the sprocket 116 to rotate the sprocket 116 in response to the motor 114 running. One or more additional gears may be present in the gearbox 146. The additional gears can alter the gearing ratio of the drive system or change the directional orientation of power input from the motor 114 to the sprocket 116.

As depicted in FIG. 16B, the one-way bearing 214 is coupled between the output shaft 218 and the sprocket 116. By way of non-limiting example, the one-way bearing 214 can be a needle bearing which allows transmission of torque from the motor 114 into the sprocket 116 when the motor 114 is running, causing the chain 104 to move in the forward direction. When the motor 114 is not running, the chain 104 can be freely moved in the forward direction on the guide bar 102, overrunning the drive system at the one-way bearing 214.

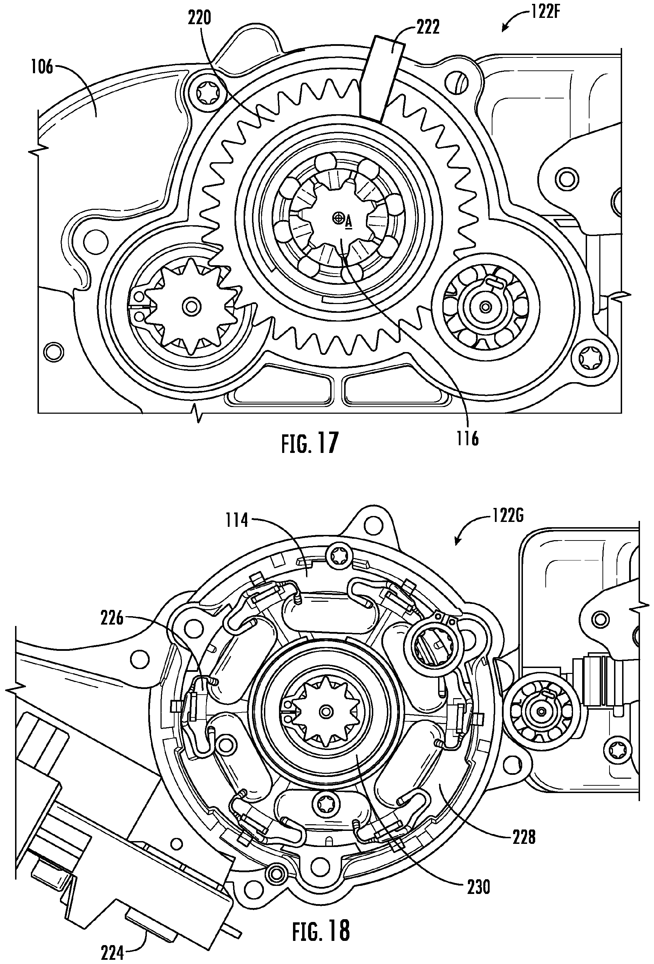

FIG. 17 illustrates an embodiment of a manual disengagement mechanism 122F which is hand-driven by the operator to disengage one or more gears within the drive system and break connection between the motor 114 and the sprocket 116. The manual disengagement mechanism 122F can act as the operating device 122 for use with the drive system of the chainsaw 100 in accordance with another embodiment. The manual disengagement mechanism 122F can include a user actuatable element. By way of non-limiting example, the user actuatable element can include a plunger 222 which extends through the housing 106 of the chainsaw 100. When depressed into the housing 106, the plunger 222 displaces a drive gear 220 of the drive system out of alignment with one or more other gears associated with the drive system. Alternatively, the plunger 222 may be rotatable or otherwise manipulatable to displace the drive gear 220. In an embodiment, displacement of the drive gear 220 can occur along the axis A. In another embodiment, displacement of the drive gear 220 can occur in a direction generally perpendicular to the axis A. With the drive gear 220 displaced, the operator can move the chain 104 in either or both the forward and rearward directions. The drive gear 220 can be biased to the operable state. By way of non-limiting example, a spring (not illustrates) can bias the drive gear 220 into alignment with the other gears of the drive system. When the operator releases the plunger 222, the drive gear 220 can return to the operable state and the motor 114 can again be coupled to the sprocket 116. At this time, the chain can be subject to motor cogging. In some instances, the drive gear 220 can be an idler gear (not illustrated) or other gear or assembly which is selectively movable into and out of alignment with the drive system to selectively interrupt and connect the motor 114 and the sprocket 116 together.

FIG. 18 illustrates an embodiment of a manual disengagement mechanism 122G which is a selectable magnetic interface acting as the operating device 122 for use with the drive system of the chainsaw 100 in accordance with another embodiment. The manual disengagement mechanism 122G includes a user actuatable element. By way of non-limiting example, the user actuatable element can include a switch or knob 224. When activated by the switch or knob 224, a magnet associated with the motor 114, the gearbox 146, or the like, is disconnected to interrupt the connection between the motor 114 and the sprocket 116. As illustrated in FIG. 18, the magnet can be a magnet 226 associated with the motor 114. For example, the magnet 226 can be part of a stator 228 or rotor 230 of the motor 114. Activating the switch or knob 224 causes the magnet 226 to break its magnetic field or otherwise magnetically uncouple from a corresponding component which in turn interrupts the transfer of power from the motor 114 to the sprocket 116.

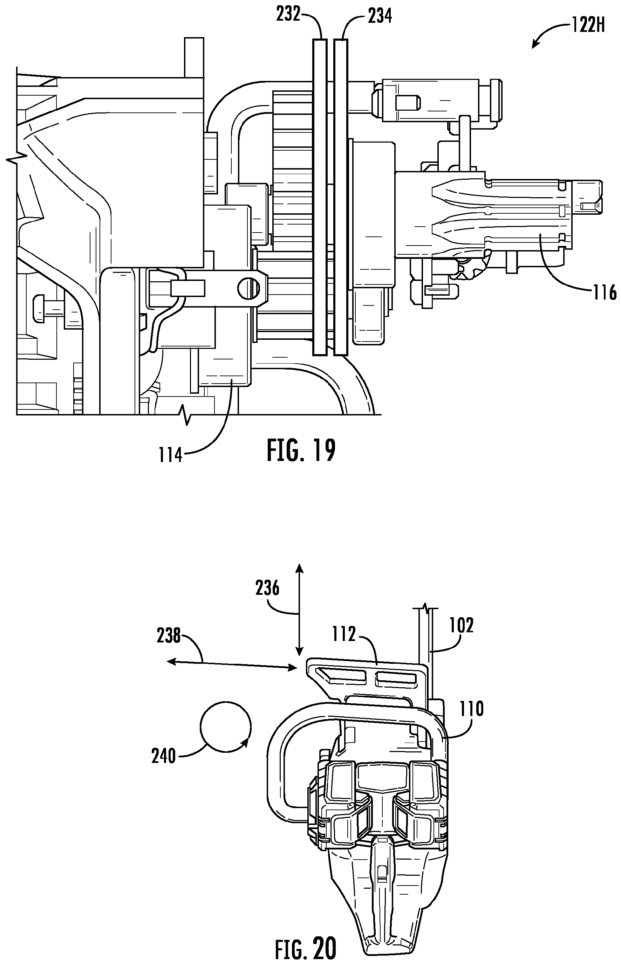

FIG. 19 illustrates an embodiment of a friction plate 122H acting as the operating device 122 for use with the drive system of the chainsaw 100 in accordance with another embodiment. The friction plate 122H generally includes a first plate 232 operably coupled to the motor 114 and a second plate 234 operably coupled to the sprocket 116. The first and second plates 232 and 234 rotate about a common axis and are moveable relative to one another. In an activated state, the first and second plates 232 and 234 can abut one another such that power is transmitted from the first plate 232 to the second plate 234. In the deactivated state, the first and second plates 232 and 234 can be spaced apart from one another. The chain 104 can freely move in both the forward and reverse directions when the friction plate 122H is in the deactivated state. FIG. 19 depicts the friction plate 122H in the deactivated state. To activate the friction plate 122H, one or both of the first and second plates 232 and 234 are moved together to abut one another. Frictional resistance or features (e.g., complementary ramped features) therebetween couple the first and second plates 232 and 234 together, permitting transmission of power from the first plate 232 to the second plate 234. The operator can selectively move the friction plate 122H between the activated and deactivated states using a user actuatable interface (not illustrated). The user actuatable interface may be coupled to one or both of the first or second plates 232 or 234 and control a relative spacing therebetween. By way of non-limiting example, the user actuatable interface can be coupled to the second plate 234 through a wire. When the operator displaces the user actuatable interface, the wire can pull the second plate 234 relative to the first plate 232, thereby changing the activation state of the friction plate 122H.

In the illustrated embodiment, the first and second plates 232 and 234 are generally planar and coaxial with one another. In another embodiment, at least one of the first and second plates 232 or 234, such as both of the first and second plates 232 and 234, can have a non-planar shape. For example, the first and second plates 232 and 234 can be friction cones which interface with one another. An electromagnet can pull the two friction cones together to transmit power from the motor 114 to the sprocket 116. When the electromagnet is deactivated, the two friction cones can separate, e.g., one or both of the friction cones can displace, interrupting transmission of power from the motor 114 to the sprocket 116.

FIG. 20 illustrates an embodiment where the brake 112 acts as the operating device 122 for use with the drive system of the chainsaw 100 in accordance with another embodiment. During normal operating use, the brake 112 acts as a guard to protect the operator from kickback. During kickback, the chainsaw 100 rotates upward such that the guide bar 102 moves towards the operator's body. As the chainsaw 100 rotates, the operator's arm engaged with the secondary handle 110 pushes the brake 112 forward. The brake 112 is in communication with the motor 114 such that activation of the brake 112 causes the motor 114 to stop running. In some instances, the brake 112 may further be coupled with a braking device which acts to immediately terminate motion of the chain 104 about the guide bar 102. When the operator is ready to resume cutting, the brake 112 is moved back into its original position and the motor 114 can again run.

As contemplated herein, the brake 112 may further act as the operating device 122 for selectively activating and deactivating the drive system. To switch between the activated and deactivated states, the brake 112 can be moved in a direction not associated with braking. For example, the brake 112 can be translated in a direction as shown by arrowed line 236 or 238. The brake 112 can be moved in a first direction associated with the arrowed line 236 or 238 to activate the drive system and correspondingly moved in a second direction associated with the arrowed line 236 or 238 to deactivate the drive system. Alternatively, the brake 112 may be rotatable about an axis 240 different from the axis associated with braking. When the brake 112 is in the deactivated state, the chain 104 may be freely movable in either the forward or backward direction.

In accordance with some embodiments described herein, the chain may be freely moveable in only a single direction when the operating device 122 is in the neutral state. In accordance with other embodiments, the chain may be freely moveable in both a forward and a reward direction, relative to the output shaft 144 of the motor 114, when the operating device 122 is in the neutral state.

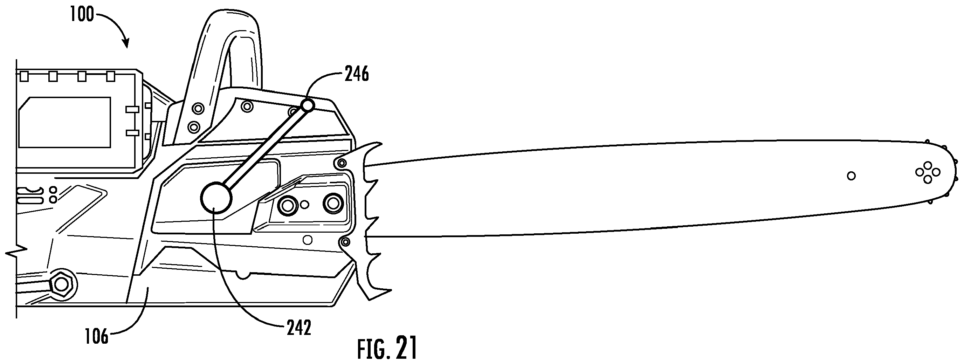

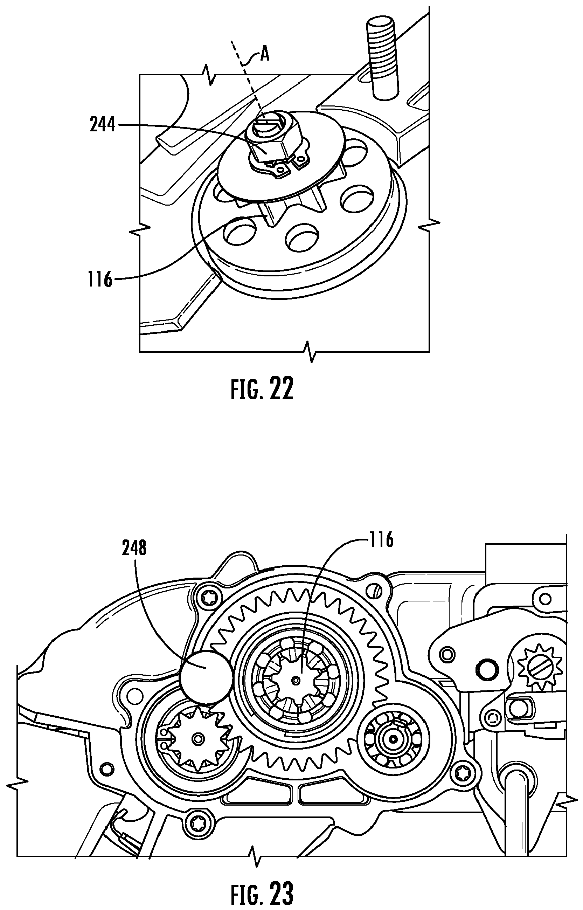

In some instances, the operator may wish to overcome restrictive motor cogging and move the chain 104 in a direction which is not freely movable. FIG. 21 depicts an embodiment of a chainsaw 100 including a hole 242 extending through the housing 106 to permit access to an internal location associated with the sprocket 116 (FIG. 22). In an embodiment, the hole 242 can be coaxial with the axis A (FIG. 22) of the sprocket 116.

Referring to FIG. 22, the sprocket 116 can include a head 244 engageable by a tool 246, such as a scrench or wrench. In an embodiment, the head 244 can be integral with the sprocket 116. In another embodiment, the head 244 can be a discrete component coupled with the sprocket 116. To manually move the chain 104, the operator can insert the tool 246 into the hole 242 and engage the tool 246 with the head 244. Once engaged, the operator can rotate the head 244 of the sprocket 116 using the tool 246 to move the chain 104 about the guide bar 102.

Referring to FIG. 23, in an embodiment the head 244 can be formed at an idler wheel 248 or other portion of the drive system not directly associated with the sprocket 116. Similar to the embodiment depicted in FIG. 22, the operator can utilize the tool 246 to engage the idler wheel 248 and cause the chain 104 to move about the guide bar 102.

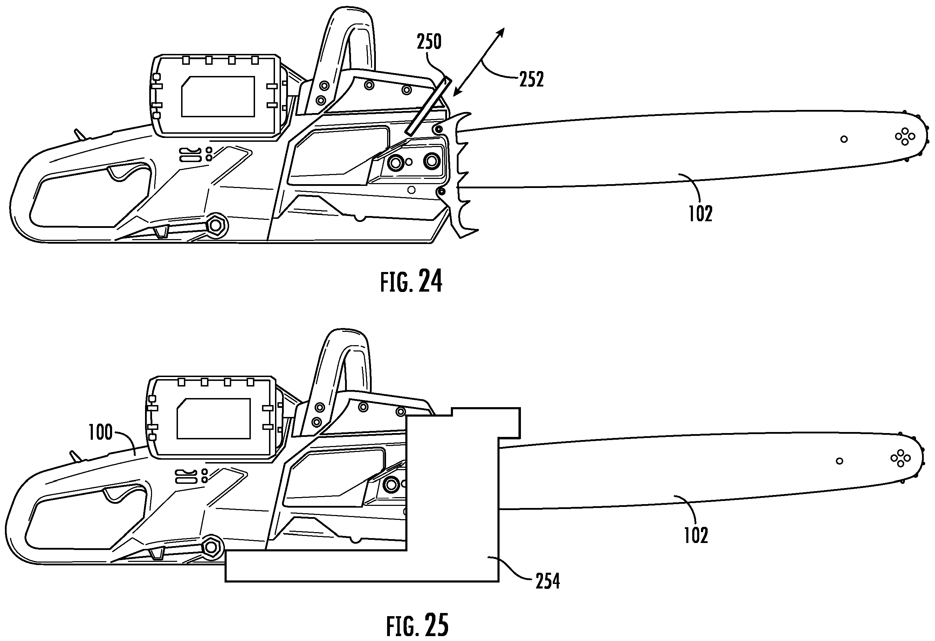

Referring to FIG. 24, the operator may overcome restrictive motor cogging using an integrated tool 250 which allows the operator to manually push the chain 104. The integrated tool 250 can be, e.g., a plunger, which is movable in directions 252. The integrated tool 250 can be pushed towards the chain 104 until seated thereagainst. Further travel of the integrated tool 250 in the same direction can advance the chain 104. The operator can then release the integrated tool 250, causing the integrated tool 250 to reset and allowing the operator to again push the integrated tool 250 towards the chain 104 and yet further advance the chain 104 on the guide bar 102.

FIG. 25 illustrates the chainsaw 100 including a sharpening tool 254 coupled therewith. The sharpening tool 254 may be a powered sharpening tool. In an embodiment, the sharpening tool 254 can be powered by the chainsaw 100. More specifically, the sharpening tool 254 can be powered by one or more energy sources of the chainsaw 100. The sharpening tool can be configured to sharpen the chain 104 in situ on the chainsaw 100. In an embodiment, the sharpening tool 254 can be placed at the guide bar 102 and put in electrical communication with one or more contacts (not illustrated) of the chainsaw 100 which allow the sharpening tool 254 to receive power from the rechargeable battery 118. Once properly seated, the sharpening tool 254 can initiate a sharpening operation which includes sharpening the teeth of the chain 104 while also advancing the chain 104. In an embodiment, the sharpening tool 254 can automatically initiate sharpening when properly aligned with the chainsaw 100. In another embodiment, the sharpening tool 254 may include one or more user actuatable interfaces which permit the operator to initiate the sharpening operation. In an embodiment, the sharpening tool 254 can include a sensor, such as a camera, a laser sensor, an infrared sensor, an ultrasonic sensor, a magnetic sensor, a tactile sensor, or the like to initially align the sharpening tool 254 with one or more teeth of the chain 104. In this regard, alignment of the sharpening tool 254 relative to the chain 104 may be performed with minimal involvement of the operator.

In some instances, the sharpening tool 254 can overcome restrictive motor cogging, thus not requiring the operator to uncouple the motor 114 from the sprocket 116. In other instances, the sharpening tool 254 can communicate with the chainsaw 100, e.g., the motor 114 or the operating device 122 to deactivate engagement between the motor 114 and the sprocket 116. The sharpening tool 254 may alert the operator when the sharpening operation is completed. For example, the sharpening tool 254 may include an indicator, such as a light or sound generator, which alerts the operator when the chain 104 is sharpened. The operator can then remove the sharpening tool 254 from the chainsaw 100 and resume cutting operations.

In one or more embodiments, the sharpening tool 254 can have active sharpening elements which perform sharpening on the chain 104 while the sharpening tool 254 advances the chain 104 about the guide bar 102. In other embodiments, the sharpening tool 254 can act solely as an advancer to advance the chain 104 about the guide bar 102. The operator can manually sharpen each tooth, while the sharpening tool 254 assists the operator in overcoming restrictive motor cogging. In some instances, the sharpening tool 254 can advance the chain 104 in response to detected manual force input into the chain, i.e., advance assist. In other instances, the sharpening tool 254 can advance the chain 104 when the operator pushes a button or otherwise signals to the sharpening tool 254 to advance the chain 104. By way of non-limiting example, signals to advance the sharpening tool 254 can include audible instructions, e.g., "advance", a gesture, such as passing of a hand in front of a sensor of the sharpening tool 254, or the like. In some instances, the sharpening tool 254 can inform the operator when the sharpening operation is complete by counting a number of teeth or a length of the chain that passes by a sensor of the sharpening tool. An onboard memory can store information relating to the number of teeth or length of the chain. Once a prescribed number of teeth or length is reached, the sharpening tool 254 can alert the operator that sharpening is complete.

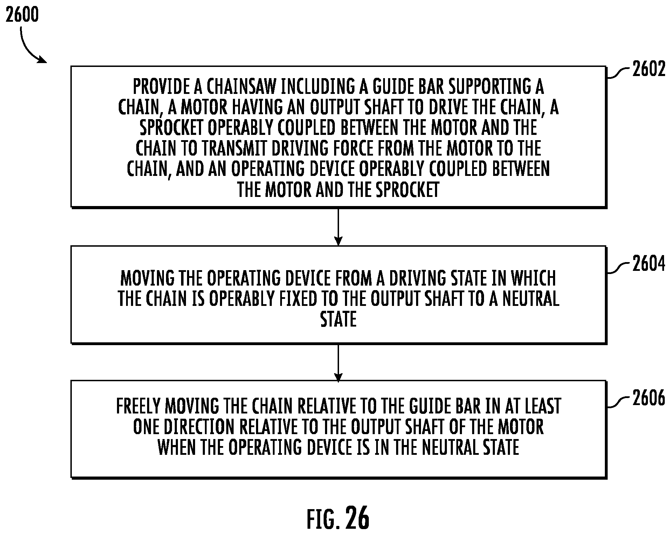

FIG. 26 illustrates a flowchart of a method 2600 of operating a chainsaw in accordance with an embodiment. The method 2600 includes a step 2602 of providing a chainsaw including a guide bar supporting a chain, a motor having an output shaft to drive the chain, a sprocket operably coupled between the motor and the chain to transmit driving force from the motor to the chain, and an operating device operably coupled between the motor and the sprocket. The chainsaw provided at step 2602 is an electric chainsaw. The motor is coupled to an electrical energy source such as a rechargeable battery.

As described above, electric chainsaws are subject to motor cogging where the chain is not freely moveable when the motor is inactive, i.e., not actively driving the chain. To overcome such motor cogging, the method 2600 can further include a step 2604 of moving the operating device from a driving state in which the chain is operably fixed to the output shaft to a neutral state. As used herein, "operably fixed to the output shaft" refers to a direct drive condition whereby motor cogging is induced on the chain when the chain is subjected to manual manipulation. In the neutral state, the operating device can allow for free movement of the chain, i.e., without motor cogging, in at least one direction (e.g., forward or backward). In some instances, the chain can be moved in either or both directions when the operating device is in the neutral state.

The method 2600 can further include a step 2606 of freely moving the chain relative to the guide bar in at least one direction relative to the output shaft of the motor when the operating device is in the neutral state. By way of example, step 2606 may be performed during a sharpening operation where an operator sharpens teeth associated with the chain. The operator can utilize a file or other sharpening device to sharpen one or more teeth of the chain. The operator can advance the chain along the guide bar to continuously expose a batch of unsharpened teeth for sharpening. This process of sharpening some teeth and advancing the chain can be repeated until the chain is fully sharpened, i.e., all of the teeth are sharp.

In some instances, the method 2600 can then involve a step of moving the operating device from the neutral state to the driving state. By way of non-limiting example, this may be performed by again moving the operating device back to an original position as seen prior to step 2604. By way of another example, the operating device can automatically return to the driving state, e.g., by a biasing element like a spring which acts upon the operating device or the user interface associated therewith. Once the operating device has returned to the driving state, the operator can resume cutting operations.

Further aspects of the invention are provided by one or more of the following embodiments:
Embodiment 1. A chainsaw comprising: a guide bar supporting a chain; a motor configured to drive the chain, the motor receiving power from an electrical energy source of the chainsaw; a sprocket operably coupled between the motor and the chain to impart driving force from the motor to the chain; and an operating device operably coupled between the motor and the sprocket and moveable between a driving state and a neutral state, wherein the chain is freely moveable in at least one direction relative to the motor when the operating device is in the neutral state.
Embodiment 2. The chainsaw of any one or more of the embodiments, wherein the operating device comprises a centrifugal clutch including one or more weighted elements moveable between a first position in the driving state and a second position in the neutral state, wherein the one or more weighted elements transmit power from the motor to the sprocket in the first position, and wherein the sprocket is free to move in the at least one direction when the one or more weighted elements are in the second position.
Embodiment 3. The chainsaw of any one or more of the embodiments, wherein the one or more weighted elements are each configured to move in a linear direction of translation when the operating device moves between the driving state and the neutral state.
Embodiment 4. The chainsaw of any one or more of the embodiments, wherein the one or more weighted elements are each configured to move in a rotational direction when the operating device moves between the driving state and the neutral state.
Embodiment 5. The chainsaw of any one or more of the embodiments, wherein the one or more weighted elements are spring-biased to the second position.
Embodiment 6. The chainsaw of any one or more of the embodiments, wherein the chain is freely moveable in both a forward direction and a rearward direction relative to the motor when the operating device is in the neutral state.
Embodiment 7. The chainsaw of any one or more of the embodiments, wherein the operating device comprises a gearbox comprising a one-way element disposed between an output shaft of the motor and the sprocket.
Embodiment 8. The chainsaw of any one or more of the embodiments, wherein the one-way element comprises a one-way bearing, wherein free movement of the chain in the at least one direction comprises free movement of the chain in a single direction, and wherein the single direction is a direction of travel of the chain when the chain is driven by the motor.
Embodiment 9. The chainsaw of any one or more of the embodiments, wherein the one-way element comprises a ramped interface comprising a first ramped element coupled to the motor and a second ramped element coupled to the sprocket, wherein the ramped interface is moveable between an activated state whereby the first and second ramped elements are coupled together and a deactivated state whereby the first and second ramped elements are spaced apart from one another, wherein the chain is freely moveable in a single direction of the at least one directions when the ramped interface is activated, and wherein the chain is freely moveable in both directions when the ramped interface is deactivated.
Embodiment 10. The chainsaw of any one or more of the embodiments, wherein the ramped interface is selectively moved between the activated and deactivated states by a user interface.
Embodiment 11. A method of operating a chainsaw, the method comprising: providing a chainsaw comprising a guide bar supporting a chain, a motor having an output shaft to drive the chain, a sprocket operably coupled between the motor and the chain to transmit driving force from the motor to the chain, and an operating device operably coupled between the motor and the sprocket; moving the operating device from a driving state to a neutral state; and freely moving the chain relative to the guide bar in at least one direction relative to the output shaft of the motor when the operating device is in the neutral state.
Embodiment 12. The method of any one or more of the embodiments, further comprising interrupting power to the motor from an electrical energy source of the chainsaw to stop driving the chain, wherein interrupting power automatically causes the operating device to move from the driving state to the neutral state.
Embodiment 13. The method of any one or more of the embodiments, further comprising automatically returning the operating device to the driving state upon providing power to the motor.
Embodiment 14. The method of any one or more of the embodiments, wherein moving the operating device comprises moving one or more weighted elements from a first position to a second position, wherein the one or more weighted elements transmit power from the motor to the sprocket in the first position, and wherein the sprocket is free to move in the at least one direction when the one or more weighted elements are in the second position.
Embodiment 15. The method of any one or more of the embodiments, wherein the chain is freely moveable in both a forward direction and a rearward direction relative to the output shaft of the motor when the operating device is in the neutral state.
Embodiment 16. The method of any one or more of the embodiments, wherein the operating device comprises a gearbox comprising a one-way element disposed between the output shaft and the sprocket.
Embodiment 17. The method of any one or more of the embodiments, wherein the one-way element comprises a one-way bearing, wherein free movement of the chain in the at least one direction comprises free movement of the chain in a single direction, and wherein the single direction is a direction of travel of the chain when the chain is driven by the motor.
Embodiment 18. The method of any one or more of the embodiments, wherein the one-way element comprises a ramped interface comprising a first ramped element coupled to the output shaft and a second ramped element coupled to the sprocket, wherein the ramped interface is moveable between an activated state whereby the first and second ramped elements are coupled together and a deactivated state whereby the first and second ramped elements are spaced apart from one another, wherein the chain is freely moveable in a single direction of the at least one directions when the ramped interface is activated, and wherein the chain is freely moveable in both directions when the ramped interface is deactivated.
Embodiment 19. A chainsaw comprising a motor receiving power from an electrical energy source of the chainsaw, wherein the motor drives a chain about a guide bar, wherein the chain is operably fixed to an output shaft of the motor when an operating device operably coupled between the motor and the chain is in a driving state, and wherein the chain is freely moveable in at least one direction relative to the output shaft of the motor when the operating device is in a neutral state.
Embodiment 20. The chainsaw of any one or more of the embodiments, wherein the operating device automatically moves from the driving state to the neutral state when the output shaft rotates below a threshold speed.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A chainsaw comprising:
a guide bar supporting a chain;
a motor configured to drive the chain, the motor receiving power from an electrical energy source of the chainsaw;
a sprocket operably coupled between the motor and the chain to impart driving force from the motor to the chain; and
an operating device operably coupled between the motor and the sprocket and moveable between a driving state and a neutral state,
wherein the chain is freely moveable in at least one direction relative to the motor when the operating device is in the neutral state.

2. The chainsaw of claim 1, wherein the operating device comprises a centrifugal clutch including one or more weighted elements moveable between a first position in the driving state and a second position in the neutral state, wherein the sprocket is free to move in the at least one direction when the one or more weighted elements are in the first position, and wherein the one or more weighted elements transmit power from the motor to the sprocket in the second position.

3. The chainsaw of claim 2, wherein the one or more weighted elements are each configured to move in a linear direction of translation when the operating device moves between the driving state and the neutral state.

4. The chainsaw of claim 2, wherein the one or more weighted elements are each configured to move in a rotational direction when the operating device moves between the driving state and the neutral state.

5. The chainsaw of claim 2, wherein the one or more weighted elements are spring-biased to the second position.

6. The chainsaw of claim 2, wherein the chain is freely moveable in both a forward direction and a rearward direction relative to the motor when the operating device is in the neutral state.

7. The chainsaw of any one of claims 1, 2, 3, 4, 5, 6 or 7, wherein the operating device comprises a gearbox comprising a one-way element disposed between an output shaft of the motor and the sprocket.

8. The chainsaw of claim 7, wherein the one-way element comprises a one-way bearing, wherein free movement of the chain in the at least one direction comprises free movement of the chain in a single direction, and wherein the single direction is a direction of travel of the chain when the chain is driven by the motor.

9. The chainsaw of claim 7, wherein the one-way element comprises a ramped interface comprising a first ramped element coupled to the motor and a second ramped element coupled to the sprocket, wherein the ramped interface is moveable between an activated state whereby the first and second ramped elements are coupled together and a deactivated state whereby the first and second ramped elements are spaced apart from one another, wherein the chain is freely moveable in a single direction of the at least one directions when the ramped interface is activated, and wherein the chain is freely moveable in both directions when the ramped interface is deactivated.

10. The chainsaw of claim 9, wherein the ramped interface is selectively moved between the activated and deactivated states by a user interface.

11. A method of operating a chainsaw, the method comprising:
providing a chainsaw comprising a guide bar supporting a chain, a motor having an output shaft to drive the chain, a sprocket operably coupled between the motor and the chain to transmit driving force from the motor to the chain, and an operating device operably coupled between the motor and the sprocket;
moving the operating device from a driving state to a neutral state; and
freely moving the chain relative to the guide bar in at least one direction relative to the output shaft of the motor when the operating device is in the neutral state.

12. The method of claim 11, further comprising interrupting power to the motor from an electrical energy source of the chainsaw to stop driving the chain, wherein interrupting power automatically causes the operating device to move from the driving state to the neutral state.

13. The method of claim 12, further comprising automatically returning the operating device to the driving state upon providing power to the motor.

14. The method of any one of claims 11, 12 or 13, wherein moving the operating device comprises moving one or more weighted elements from a first position to a second position, wherein the one or more weighted elements transmit power from the motor to the sprocket in the first position, and wherein the sprocket is free to move in the at least one direction when the one or more weighted elements are in the second position.

15. The method of any one of claims 11, 12, 13 or 14, wherein the chain is freely moveable in both a forward direction and a rearward direction relative to the output shaft of the motor when the operating device is in the neutral state.
